# EUROPEAN PATENT APPLICATION

(11) **EP 4 835 286 A1**
(43) Date of publication of application: **04.11.2026**
(21) Application number: 26172930.5
(22) Date of filing: 17.04.2026
(51) Int. Cl.: F03D 1/06, F03D 7/02, F03D 80/70

(54) **SUPPORT MEMBER, ROTOR AND METHOD FOR ASSEMBLING A ROTOR**

(30) Priority: 30.04.2025 DE 102025116749
(71) Applicant: Nordex Energy SE & Co. KG, 22419 Hamburg (DE)
(72) Inventor: Malischewski, Mathias, 22419 Hamburg (DE)
(74) Representative: Epping - Hermann - Fischer

(57) **Abstract**

A support member (200) for a blade pitch system (300) of a wind turbine (100) is disclosed. The support member (200) comprises:
- a first mounting surface (201) configured to be mounted to a first structure (112, 400) of the wind turbine (100),
- a second mounting surface (202) configured to be mounted to one of a first bearing ring (510) and a second bearing ring of a slewing bearing (500) of the blade pitch system (300), the second mounting surface (202) being opposite to the first mounting surface (201), and
- a support portion (210) extending at least partially along a circumference of the support member (200),
wherein the support member (200) is configured to carry a plurality of fasteners (301) for connecting the first bearing ring (510) of the slewing bearing (500) to the first structure (400) through the support member (200).

## Description

The disclosure relates to a support member for a blade pitch system of a wind turbine. The disclosure further relates to a rotor for a wind turbine, in particular a rotor with a blade pitch system as described herein. The disclosure further relates to a method for assembling a rotor for a wind turbine, in particular for assembling a rotor as described herein.

A wind turbine may include a rotor having multiple rotor blades each of which includes a rotatable sub-assembly equipped with a rotary connection e.g., a bearing, and a drive. The rotor blades transform wind energy into mechanical power at the rotor in the form of a drive torque that drives the generator of the wind turbine via a drive train. The rotor is typically equipped with a blade pitch system (encompassing the rotary connection and the drive) to pitch or turn each rotor blade to optimize power generated at the rotor as well as to handle certain situations, e.g., dampening the tower, feathering the blade during emergencies, etc.

**It** is desirable to provide a support member for a blade pitch system that enables a reliable connection, strength, stability and operation. It is further desirable to provide a rotor for a wind turbine that enables a reliable operation. It is further desirable to provide a method for assembling a rotor for a wind turbine, wherein the method can be carried out efficiently.

Embodiments of the disclosure provide a support member for a blade pitch system of a wind turbine. Embodiments of the disclosure provide a rotor for a wind turbine. Embodiments of the disclosure provide a method for assembling a rotor for a wind turbine.

According to an embodiment, the support member comprises a first mounting surface configured to be mounted to a first structure of the wind turbine. The support member comprises a second mounting surface configured to be mounted to one of a first bearing ring and a second bearing ring of a slewing bearing of the blade pitch system. The second mounting surface is opposite to the first mounting surface. The support member comprises a support portion extending at least partially along a circumference of the support member. The support member is configured to carry a plurality of fasteners for connecting the first bearing ring of the slewing bearing to the first structure through the support member.

According to some embodiments, the second mounting surface being opposite to the first mounting surface is in particular with reference to an axis of rotation of the slewing bearing.

According to some embodiments, the support portion extends at least partially along at least one of a circumferential direction and a radial direction of the support member.

According to some embodiments, the support portion protrudes from an inner peripheral surface of the support member.

The support member is configured to support the slewing bearing. The support member is configured to be arranged between the first bearing ring and the first structure. According to some embodiments, the first structure is a hub for the wind turbine. According to some embodiments, the first structure is an extender which is arranged between the rotor hub and a rotor blade for the wind turbine. For example, the extender is configured to be coupled to the rotor hub. For example, the extender enables an increase in the rotor diameter, in particular without the need of changing the rotor blade design for attaining the increased length. For example, the extender may allow certain customizations and optimizations, e.g., providing a reduced diameter at hub connection in comparison to the actual blade root diameter.

The support member is mountable to the first structure via the fasteners for the first bearing ring. For example, the fasteners comprise threaded bolts and nuts. The support member comprises a plurality of through holes. The fastener can extend through the through holes from the first mounting surface to the second mounting surface.

According to some embodiments, the support portion is configured to provide reinforcement, e.g., stiffness to the support member.

According to some embodiments, the support portion is an integral projection or protrusion of the support member, for example, in the form of a ring like extension. In particular, the support portion projects radially, for example, inwards or outwards depending on its position with reference to the first bearing ring and the second bearing ring. In an exemplary configuration, the support portion is configured to support a pitch drive.

Alternatively, or in addition, the support portion is for example configured to reinforce, e.g., stiffen at least one of the support member, the first structure, and the slewing bearing to which the support member is connected. According to some embodiments, the slewing bearing is a pitch bearing.

The support member is configured to improve strength of the slewing bearing and/or the first structure. The support member, which may be for example a standalone component, may be manufactured in a manner that is easier to assemble. For example, the support member is configured to connect the first bearing ring via the fasteners to the first structure to form an assembly, for example, in a facility or an assembly unit. The support member can also be mounted at site if components arrive from different locations.

According to some embodiments, the support member is produced using at least one of casting, forging, rolling, ring rolling and so on. The support member may comprise various shapes, for example, ring shape, a disc shape, and/or a flange shape. According to some embodiments, the support member comprises at least one of an alloy or a metal, e.g., steel, iron, and a composite material.

In some embodiments, the support member comprises a flange extending radially, e.g., inwards or outwards from the support portion. The flange is configured to carry the pitch drive of the blade pitch system.

According to one example, the flange may be integral with the support portion, e.g., manufactured in a casting process along with the support portion.

In this case where the flange carrying the pitch drive is integral with the support portion, if there is damage at a specific location at teeth of the pitch bearing ring meshing with pitch drive pinion, then the pitch bearing and the support member may be disassembled from the first structure, and then the support member may be angularly moved or rotated so as to change or shift the position of the flange, resulting in meshing of the pitch drive pinion with different set of teeth of the pitch bearing ring away from damaged location.

According to another example, the flange may be manufactured separately as a standalone component and coupled to the support portion at any desired location along the circumference of the support portion. The support portion may be provided with a suitable provision (explained in detail later) for rigidly coupling the flange with the support portion. According to some examples, the flange may in the form of a bracket, a clamp, a fixture, a mount, or any other member intended to support a pitch drive.

According to the example where the flange is coupled to the support portion, greater degree of design freedom and flexibility may be attained in terms of positioning the flange together with the pitch drive to effectuate pitching, as well as to shift or change the position of the flange together with the pitch drive from one location to another, for example, when there is damage to teeth of the bearing in the original location.

According to some embodiments, the support member may comprise two or more flanges with one of them serving as the main position and remaining serving as back-up positions for supporting the pitch drive.

According to one example, the pitch drive comprises an electric actuator to effect a relative rotary movement between the first bearing ring and the second bearing ring.

In some embodiments, at least one of the support portion and the flange comprises a stepped extension adjoining the first mounting surface.

For example, the stepped extension is configured to abut at least one of a first diametrical portion and a second diametrical portion of the first structure. A first diameter of the first diametrical portion is different than a second diameter of the second diametrical portion. For example, the first diametrical portion corresponds to an inner diameter of the first structure, for example, to an inner diameter of the extender, which, for example, comprises a hollow cylindrical shape. For example, the second diametrical portion corresponds to an outer diameter of the first structure, for example, to an outer diameter of the extender.

For example, the stepped extension is configured to center and set the radial position of the support member relative to the first structure. There may be a stepped extension on both the sides so as to form a groove inside which a wall of the first structure is received. For example, the stepped extension is configured to align the support member and the first structure relative to each other as desired. For example, the stepped extension is configured to support the extender. For example, the stepped extension is configured to be supported by a flange of the rotor hub.

According to an embodiment, the support member comprises a toothing having a plurality of teeth arranged adjacent to the support portion.

For example, if the support portion extends at least partially along the circumference of the support member at a first section, then the toothing having the plurality of teeth may be arranged along circumference of the support member at the second section, the second section being adjacent to the first section considered along the axial direction of the bearing or the rotor blade root or the support member.

According to an exemplary configuration, both the support member and the bearing ring (first bearing ring or second bearing ring depending on which one carries the rotor blade) comprises toothing having a plurality of teeth. Accordingly, both the support member and the bearing ring may comprise a flange for supporting the pitch drive. For example, a plurality of teeth may be defined on an inner circumference of the second bearing ring (e.g., rotating, inner ring) as well as on an inner circumference of the support member, with the support member fixedly attached to the first bearing ring (e.g., stationary, outer ring). With this configuration, at least two different arrangements are possible: a) Pitch drive may be fixedly supported by the flange of the support member such that the pinion of the pitch drive engages with the plurality teeth of the second bearing ring to rotate the second bearing ring that carries the rotor blade, or b) Pitch drive may be fixedly supported by the flange of the second bearing ring such that the pinion of the pitch drive engages with the plurality teeth of the support member which results in rotation of the second bearing ring relative to the stationary support member.

Thus, greater flexibility and control in terms of pitch actuation as well as positioning and orientation of the pitch drive may be attained.

According to some embodiments, the support portion comprises at least one of a stepped contour, an arcuate contour, and a tapered contour protruding radially from the support member. For example, the protruding contour gives the support member additional strength and stability.

According to some embodiments, the support portion comprises a provision or a plurality of provisions for supporting a component. For example, the component is at least one of a stiffening element, e.g., a stiffening web, and a pitch system component. For example, the provision is in the form of at least one of an extension, a bracket, a clamp, a mount, a fixture, and a flange. Other forms are possible as well. For example, the provision is configured to allow welding and/or fastening of a stiffening element, like a stiffening beam and/or a stiffening web, and/or a support structure for a pitch box and/or a cabinet.

In an embodiment, the provision may be configured to support a hydraulic pitch drive and associated elements in the case of a hydraulic pitch system.

According to some embodiments, the support member is provided as a continuous ring that extends continuously and seamlessly over 360°.

According to an embodiment, the support member is interposed or sandwiched between the slewing bearing and the first structure, for example, between the second bearing ring and the extender.

According to an embodiment, the support member is juxtaposed against the support member as well as the first support structure, in particular the extender, so that reinforcing effect as well as stability may be imparted by the support member, especially at the joining interface of the extender.

According to some embodiments, the support member comprises a plurality of segments, for example, arcuate segments joined end to end in series to form one complete support member. This makes installation flexible, for example. For example, each segment extends over a ring segment of less than 360°. Together, the segments form a ring that extends over 360°. For example, the segments are configured to be connected in the circumferential direction end to end. This configuration is advantageous in the event that if there is damage to one segment, that particular segment may be replaced with a newer segment instead of replacing the entire support member if the support member were seamless instead of segmented.

According to an embodiment, the rotor for a wind turbine comprises a support member according to any of the embodiments disclosed herein. The rotor comprises the rotor hub. The rotor comprises a slewing bearing. The slewing bearing comprises a first bearing ring and a second bearing ring. The second bearing ring is arranged coaxially relative to the first bearing ring. One of the first bearing ring and the second bearing ring is mounted to the support member.

The rotor comprises a rotor blade. The rotor blade is coupled to the other of the first bearing ring and the second bearing ring, such that the rotor blade is rotatable relative to the rotor hub.

In particular, the rotor comprises one support member for each rotor blade. Thus, for example, the rotor comprises three support members corresponding to three rotor blades.

According to some embodiments, the rotor comprises an extender. In particular, the rotor comprises one extender for each rotor blade. Thus, for example, the rotor comprises three extenders corresponding to three rotor blades.

According to some embodiments, the extender comprises a first end and a second end. The second end is opposite to the first end. The extender is mounted to the rotor hub at the second end. The support member is mounted to the first end.

According to some embodiments, the support member is attached to the first end of the extender facing away or distant from the rotor hub. The extender and the rotor hub are rigidly connected to each other. In particular, no rotational movement is possible between the rotor hub and the extender at the second end. Pitching of the rotor blade is possible due to the slewing bearing that is arranged at the first end of the extender. During pitching of the rotor blade, the rotor blade rotates relative to the extender and the rotor hub. The extender is fixed in position together with the rotor hub.

According to some embodiments, the extender comprises a hollow cylindrical shape. This allows for a lightweight and stable extender.

According to other embodiments, other shapes of extender such as frustoconical is also possible.

According to some embodiments, the extender is made of one of concrete, a metal, a steel, an alloy, a composite material, and a fibre-reinforced material. This allows for a lightweight and stable extender.

For example, the extender comprises an extension between the first end and the second end is at least 2 meters, in particular in a range of between 3 meters and 15 meters, for example in a range of between 4 meters and 11 meters, for example an extension of about 3 meters, of about 4 meters, of about 5 meters, of about 6 meters, of about 7 meters, of about 8 meters, or of about more than 8 meters.

According to some embodiments, the support member comprises a thickness between the first mounting surface and the second mounting surface. A ratio of the thickness of the support member to a thickness of the one of the first bearing ring and the second bearing ring that is mounted to the support member is less than unity, in particular ranging from 0.4 to 0.9, preferably ranging from 0.5 to 0.8.

According to an embodiment, the one of the first bearing ring and the second bearing ring to which the rotor blade is coupled comprises teeth.

For example, if the rotor blade is coupled to either the first bearing ring or the second bearing ring, then teeth (internal or external) may be defined on the first bearing ring or the second bearing ring carrying the rotor blade, so as to engage with the corresponding teeth of a pinion of the pitch drive which is fixed to the support member.

The pitch drive in this scenario may reside inside the extender (or inside the hub if extender is absent) and engages the teeth of the bearing ring carrying the rotor blade.

According to another example, teeth (internal or external) may be defined on the support member, while the first and the second bearing rings do not have any teeth at all. In this case, the pitch drive having the pinion defined with teeth is carried by one of the first bearing ring or the second bearing ring (rotating ring) to which the blade is connected, while the other of the first bearing ring or the second bearing ring (stationary ring) is fixedly connected to the support member. In this scenario, the pitch drive may be inverted. i.e., the pitch drive can be mounted so that it resides inside the blade root section and is supported or carried by, for instance, the second ring, e.g., inner ring so that it engages the teeth of the support member which is fixedly connected to the first ring, i.e., the outer ring.

According to some embodiments, the method for assembling the rotor for a wind turbine comprises:
- providing a first structure of the wind turbine,
- providing a support member according to any one of the embodiments disclosed herein,
- providing a slewing bearing,
- mounting the support member to the first structure, and
- mounting the slewing bearing to the support member.

According to some embodiments, one support member is provided for each rotor blade.

According to some embodiments, one slewing bearing is provided for each rotor blade.

The steps described in the above embodied method involving mounting the support member and mounting the slewing bearing are repeated for every rotor blade.

For example, the rotor, in an assembled state, comprises three rotor blades. One support member is provided for each one of the three rotor blades. One slewing bearing is provided for each one of the three rotor blades. One support member and one slewing bearing are mounted per rotor blade and one blade pitch system may be provided per rotor blade.

According to some embodiments, the method comprises attaching a pitch drive to one of the support member and a bearing ring of the slewing bearing, wherein the pitch drive is configured to engage with the other of the support member and the bearing ring for pitching.

According to an embodiment, the pitch drive may be an electric drive or a hydraulic drive.

According to some embodiments, the method further comprises:
- lifting the rotor hub to a top of a tower of the wind turbine,
- fixing the rotor hub to a transmission assembly of the wind turbine, and
- coupling a rotor blade to the slewing bearing.

For example, fixing the rotor hub to the transmission assembly involves fixing the rotor hub to a rotor shaft which forms part of the transmission assembly of the wind turbine.

According to some embodiments, the extender is provided as the first structure. For example, the support member and the bearing ring are mounted via bolts to the extender to form an extender assembly. This can be carried out, for example, in a facility or assembly unit. This can be carried out, for example, also at site if components arrive from different locations.

According to some embodiments, the extender assembly comprising the extender, the slewing bearing, and the support member without the blade pitch system may be transported to the site as one unit.

According to some embodiments, the pitch system comprising the pitch drive is attached to the extender assembly, for example to the support member.

Afterwards, it is possible to transport the extender assembly together with the pitch drive to the site. In particular, the rotor hub is transported separately.

At the site, all the three extender assemblies are attached to the hub. For example, necessary cable connections, interfaces, etc., between the hub and the extender assemblies are established.

Afterwards, the rotor hub with the three extender assemblies is lifted to the top of the tower for the wind turbine. The rotor hub is mounted to the transmission assembly, in particular to the rotor shaft.

Afterwards, each rotor blade is lifted and mounted individually to the extender assembly.

In particular, this allows transportation of the extender assembly with the extender, the support member and the slewing bearing as a unified assembly. For example, this allows for avoiding a conventional two step assembly, according to which the extender is first separately mounted to the hub, followed by mounting the blade to the extender. The method according to the present disclosure thus allows for saving man and machine hours, which leads to a cost-effective assembling method.

Advantages, features and further developments of the support member, the rotor, and/or the method also apply to the other embodiments.

Embodiments of the present invention will be further described with reference to the accompanying drawings. In the drawings, elements of the same structure and/or functionality may be referred to by the same reference signs. Embodiments shown in the figures are illustrative representations and are not necessarily drawn to scale.
Figure 1 is a schematic view of a wind turbine according to an embodiment.
Figure 2 is a schematic exploded view of a rotor of a wind turbine according to some exemplary embodiments.
Figures 3 and 4 are schematic perspective views of a support member according to some embodiments.
Figure 5 is a schematic partial sectional view of parts of a rotor of a wind turbine according to an embodiment.
Figure 6 is a schematic partial sectional view of a slewing bearing ring connected to the first structure through the support member having a stepped extension according to an embodiment.
Figure 7 is a flowchart of a method according to an embodiment.

While the invention is amenable to various modifications and alternative forms, specifics thereof have been shown by way of examples in the drawings and will be described in detail. It should be understood, however, that the intention is not to limit the invention to the particular embodiments described. On the contrary, the intention is to cover all modifications, equivalents and alternatives falling within the scope of the invention as defined by the appended claims.

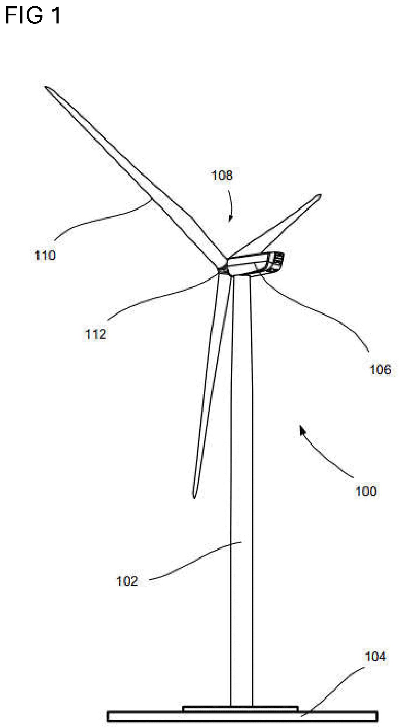

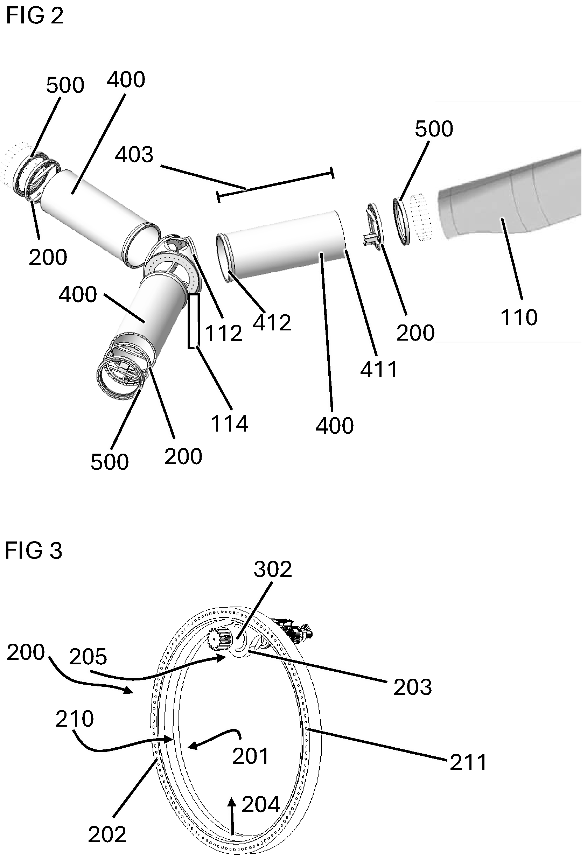

As shown in Figure 1, a wind turbine 100 comprises a tower 102. The tower 102 is connected to a foundation 104 fixed to the ground. Specifically, the foundation 104 may be formed at a predetermined depth inside the ground, which is reinforced by a composite structure, for example a concrete support. A nacelle 106 is arranged on a top of the tower 102 opposite the foundation 104. The nacelle 106 carries a rotor 108 that houses the drive train among other components and subassemblies. Inside the nacelle 106, for example, a generator is arranged that is connected to the rotor 108 via the drive train. The drive train may comprise, for example, a gearbox and a rotor shaft 114 (for example shown illustratively in Figure 2). The rotor 108 comprises several rotor blades 110. The rotor blades are mounted on a rotor hub 112. The rotor hub 112 is connected to the rotor shaft 114.

For example, the rotor 108 is driven by an airflow interaction of moving wind with the rotor blades 110 of the rotor 108. The rotational movement of the rotor 108 is transmitted via the drive train to the generator. The generator converts the mechanical output of the rotor 108 into electrical energy.

By rotating (pitching) the rotor blades 110 relative to the hub 112, the load on the rotor may be controllable. The rotor blades 110 are configured to be pitched in and out of the wind in order to modulate the energy capture as wind decreases or increases. The rotor blades 110 are pitchable to adjust the output or to protect the wind turbine from damaging overloads.

To perform the pitch control, each rotor blade 110 is provided with a slewing bearing 500 as shown in the following figures. The slewing bearing 500 equipped within a pitch system and intended to facilitate pitching of the blade is referred to as a pitch bearing. The pitch bearing 500 is located generally between the rotor hub 112 and the respective rotor blade 110. A mechanism with a pitch drive 302 (Figures 2 to 5), for example a hydraulic pitch drive or an electric pitch drive, provides the necessary energy and force for pitching the respective rotor blade 110. The pitch drive 302 is part of a blade pitch system 300 that in addition, for example, comprises a controller and/or other elements.

According to further embodiments, the slewing bearing 500 is another bearing of the wind turbine 100, for example a yaw bearing.

Figure 2 schematically shows an exploded view of the rotor hub 112 and one of the rotor blades 110 with an extender 400 provided therebetween. The rotor hub 112 is attached to the rotor shaft 114, such that a rotation of the rotor hub 112 leads to a rotation of the rotor shaft 114.

As shown, the rotor blade 110 is mounted to the rotor hub 112 via the extender 400 to increase the energy yield by way of increasing the rotor diameter. The extender 400 is provided to enable and/or to increase a distance between the rotor hub 112 and the rotor blade 110 tip.

The rotor blade 110 may be connected directly to the rotor hub 112 in an alternate configuration.

The extender 400 comprises a first end 411 and a second end 412. The extender 400 extends between the first end 411 and the second end 412 along a length 403 of the extender 400. For example, the length 403 of the extender 400 is greater than 5 meters. For example, the length 403 of the extender 400 is smaller than 13 meters. Other values are possible.

The extender 400 comprises, for example, a hollow circular cylindrical shape. The extender 400 comprises or is made of, for example, at least one of a concrete, a metal, a steel, an alloy, a composite material, and a fiber-reinforced material.

The extender 400 is attached to the rotor hub 112 at the second end 412. According to one embodiment, the extender 400 and the rotor hub 112 are immovably fixed to each other. In particular, no rotation between the extender 400 and the rotor hub 112 is possible.

Alternately, the extender 400 may also be rotatably attached to the hub 112 such that the rotor blade together with the extender may be rotated or pitched by means of the pitch drive for pitching.

In the context of Figure 2, a configuration where the extender 400 is immovably fixed with the rotor hub 112 is discussed. The rotor blade 110 is coupled to the extender 400 at the first end 411. The rotor blade 110 and the extender 400 are coupled with each other, such that a relative rotational movement between the rotor blade 110 and the extender 400 is possible, in particular for pitching the rotor blade 110 relative to the extender 400. Having the slewing bearing 500 for pitching the rotor blade 110 arranged at the first end 411 allows an arrangement of a support member 200 at least partly outside of the extender 400.

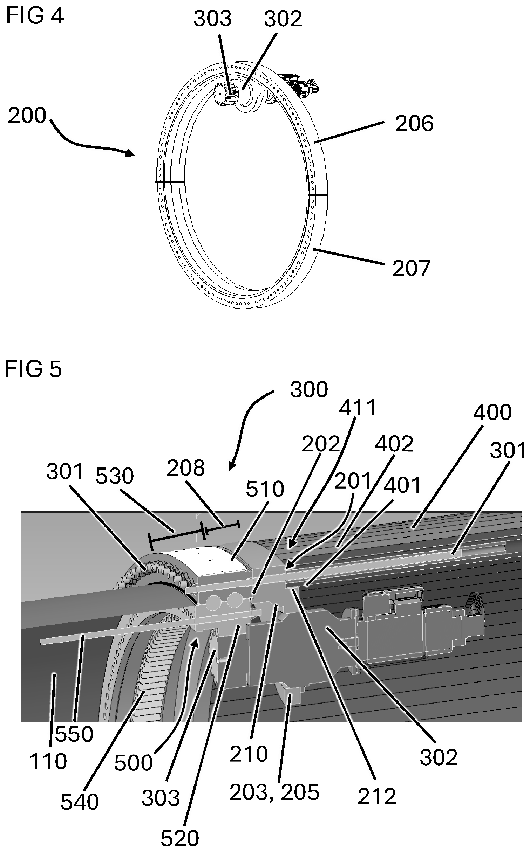

The slewing bearing 500 is arranged between the rotor blade 110 and the extender 400 for enabling the relative rotation. The slewing bearing 500 comprises a first bearing ring 510 (Figure 5) that is attached to the extender 400. Since the extender 400 is stationary in the context of figure 2, the first bearing ring 510 will be a stationary ring of the bearing 500. The slewing bearing 500 comprises a second bearing ring 520 (Figure 5) that is attached to the rotor blade 110. The second bearing ring 520 will be the movable ring of the bearing 500. As shown in figure 2, the first bearing ring 510 may also be referred to as outer bearing ring. The second bearing ring 520 may also be referred to as inner bearing ring. Rolling elements are arranged between the first bearing ring 510 and the second bearing ring 520 for the relative rotational movement between the first bearing ring 510 and the second bearing ring 520.

The support member 200 according to some embodiments of the disclosure is arranged between the rotor blade 110 and the extender 400, in particular to reinforce and stabilize the connection between the rotor blade 110 and the extender 400. In particular, support member 200 is arranged to reinforce and stabilize the slewing bearing 500 on one side, and the extender 400 on the other side.

A further effect is that the strength of the bolts used to connect the root end section of the rotor blade 110 to the extender 400 through the slewing bearing 500 and the support member 200 is reinforced and stabilized. Thus, premature or unintended loosening of the bolts or weakening of the bolted connections may be avoided by providing the support member 200 in an annular manner.

The support member 200 according to an embodiment has a ring shape such that the first and the second mounting surfaces 201, 202 may have conforming geometries with respect to corresponding abutting surfaces of the extender 400 and the bearing ring, respectively. Other shapes are possible, for example a disc shape. The support member 200 is for example made out of steel or iron or any other metal or alloy, or a metal based composite material. The support member 200 is for example produced using at least one of casting, forging, rolling, and ring rolling or any other suitable manufacturing process.

The embodiments described also apply to the second and third rotor blades not explicitly shown, which each comprise associated extenders 400, support members 200 and slewing bearings 500.

Figures 3 and 4 schematically show each the support member 200 with the pitch drive 302 according to some embodiments. In the embodiment of Figure 3, the support member 200 is provided as a single piece. In the embodiment of Figure 4, the support member 200 comprises two segments 206, 207 that together form the ring shape extending over 360°. More than two segments 206, 207 are possible, for example three segments, four segments or more.

The support member 200 comprises a first mounting surface 201. The support member 200 is mountable to the extender 400 (or alternately to the hub in the absence of extender) at the first mounting surface 201. For example, in a mounted state, the first mounting surface 201 and the extender 400 are in contact with each other, which can be viewed in Figure 5.

The support member 200 comprises a second mounting surface 202. The support member 200 is mountable to the slewing bearing 500 at the second mounting surface 202. For example, in a mounted state, the second mounting surface 202 and the slewing bearing 500 are in contact with each other.

The support member 200 comprises a plurality of through holes 211. The through holes 211 penetrate the support member 200 from the first mounting surface 201 to the second mounting surface 202. A plurality of fasteners 310 (Figure 5), for example bolts, can be arranged to reach through the through holes 211 for coupling the support member 200 with the extender 400 and/or the slewing bearing 500.

The support member 200 comprises a support portion 210. The support portion 210 for example is an integral projection that extends like a ring or a rim or a collar concentrically with the support member 200. The support portion 210 radially protrudes inwards along an inward direction 204.

Alternately, the support portion 210 may extend radially outwards.

In another embodiment, the support portion 210 may extend both inwards and outwards in the radial direction.

The inward direction 204 radially points towards the center of the support member 200. For example, the support portion 210 serves as reinforcement, bracing and/or to stabilize the support member 200. Alternatively, or additionally, the support portion 210 serves as a mounting interface for other elements, for example, for supporting a beam that extends radially or in the form of a secant inside a periphery of the support member 200.

According to some embodiments, the support portion 210 comprises a flange 203 for mounting the pitch drive 302. According to some embodiments, the flange 203 for mounting the pitch drive 302 is arranged separately from the support portion 210 . The flange 203 is integral part of the support member 200. Alternately, the flange 203 may produced separately and attached to the support member 200.

In an embodiment, the flange 203 itself serves as a provision 205 to realize certain functionalities. The flange 203 radially protrudes inwards along an inward direction 204.

For example, the flange 203 serving as the provision 205 may be in the form of at least one of an extension, a bracket, and a mount.

The flange 203 serving as a provision 205 allows welding and/or fastening of an additional elements, e.g., a stiffening element, like a stiffening beam and/or a stiffening web. Alternatively, or additionally, for example, the provision 205 allows welding and/or fastening of a support structure for the pitch system 300 or parts thereof, for example, for the pitch box or cabinet.

The pitch drive 302 is attachable to the support member 200, particularly in a manner to be supported by the flange 203 in order to effect rotation of the rotor blade 110 relative to the support member 200.

According to further embodiments (not explicitly shown), the support member 200 is formed to support more than one pitch drive 302, for example two pitch drives 302 or more. For example, the support member 200 may be provided with an integral web or a beam like member extending diametrically and comprising two apertures e.g., holes on diametrically opposite ends for supporting two pitch drives. In another example, the web or beam like member may be attached to the support member 200 so as to support the pitch drives.

In yet another example, two or more flanges 203 extending radially inwards from the support portion 210 and separated circumferentially along the support member 200 by predetermined angular distances may be provided. The two or more flanges 203 may be manufactured as a single structure conjoined by intermediate connecting portions, or may be manufactured as discrete structures and attached individually to the support member 202.

Figure 5 schematically shows the support member 200 in a mounted state.

The support member 200 is arranged between the first end 411 of the extender 400 and the first bearing ring 510, e.g., outer bearing ring of the slewing bearing 500. The first mounting surface 201 of the support member 200 faces the extender 400. The second mounting surface 202 of the support member 200 faces the first bearing ring 510.

Each of the fasteners 301 passes through the first bearing ring 510 and the support member 200 to attach the first bearing ring 510 to the extender 400 through the support member 200 arranged therebetween. The support member 200 is therefore fixed to the extender 400 by the same fasteners 301 as the first bearing ring 510.

The second bearing ring 520 is arranged coaxially inside the first bearing ring 510 with rolling elements, e.g., spherical rollers, cylindrical rollers, etc. The rotor blade 110 is attached to the second bearing ring 510 by further fasteners 550. Thus, a relative rotation of the rotor blade 110 with respect to the support member 200 and the extender 400 is possible. The relative rotation of the rotor blade 100 is realized at the first end 411 of the extender that faces away from the rotor hub 112.

The second bearing ring 520 comprises teeth 540 on an inward facing side. A toothed wheel (or pinion) 303 of the pitch drive 302 fixed to the support member 202 is in engagement with the teeth 540. This allows the relative rotation to be attained. In an alternative embodiment, which is not explicitly shown in the figures, the pitch drive 302 is attached to the second bearing ring 520 and the teeth 540 are provided on an inward facing side of the support member 200, for example as part of the support portion 210. In this embodiment, the toothed wheel 303 of the pitch drive 302 is in engagement with the teeth 540 of the static support member 200.

The support member 200 comprises a stepped extension 212, for example, adjacent to the first mounting surface 201 or on the side facing or being proximal to the extender 400. The stepped extension 212 may extend axially inside the extender 400 as shown such that at least some portion of a wall of the extender 400 abuts the stepped extension 212 in the axial direction. The extender 400 comprises a first diametrical portion 401, which can be referenced by an inner diameter of the extender 400. The outer diameter of the stepped extension 212 corresponds to the first diametrical portion 401 or is slightly smaller. The stepped extension 212 is useful for simple and reliable installation of the support member 200, as the stepped extension 212 simplifies the alignment of the support member 200 at the first end 411 of the extender 400. Furthermore, the stepped extension 212 abutting the first diametrical portion 401 may take part in transfer of loads and stiffening the interfaces.

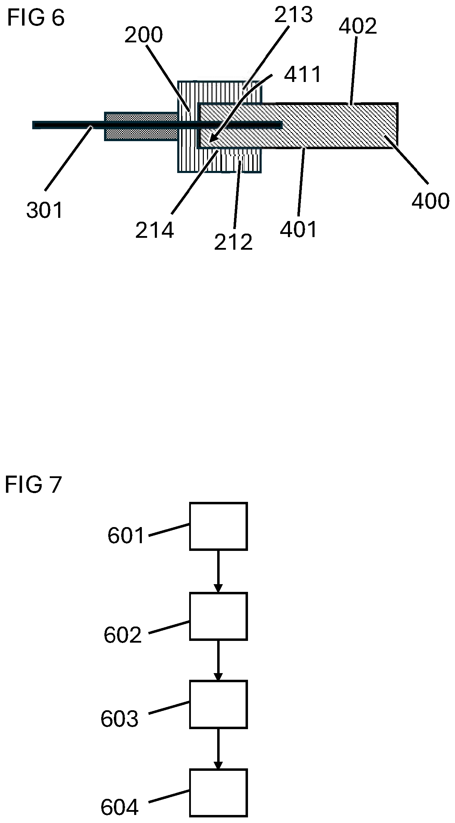

As schematically shown in Figure 6, according to some embodiments, the support member 200 may comprise a further stepped extension 213 that extends axially outside the extender 400. The stepped extension 212 and the further stepped extension 213 form a groove 214 in which the first end 411 of the extender 400 is arranged or inserted. The extender 400 comprises a second diametrical portion 402, which can also be referred to as outer diameter of the extender 400. The inner diameter of the further stepped extension 213 corresponds to the second diametrical portion 402 or is slightly larger. The further stepped extension 213 is useful for simple and reliable installation of the support member 200, as the further stepped extension 213 simplifies the alignment of the support member 200 at the first end 411 of the extender 400.

The support member 200 comprises a thickness 208 between the first mounting surface 201 and the second mounting surface 202. The thickness 208 is measured along an axial direction. For example, the thickness 208 is in a range of between 150 mm to 250 mm, for example about 200 mm. The weight of the support member 200 for example is in a range of between 1 and 1.5 T.

The first bearing ring 510 comprises a ring thickness 530. The ring thickness 530 of the first bearing ring 510 is also measured along the axial direction. For example, the thickness 208 of the support member 200 is smaller than the ring thickness 530. For example, a ratio of the thickness 208 of the support member 200 to the ring thickness 530 of the first bearing ring 510 is less than unity, in particular ranging from 0.4 to 0.9, or in a range from 0.5 to 0.8.

In alternate embodiments, the ratio of thickness 208 of the support member to a thickness of second bearing ring 520 may be considered.

The support member 200 arranged at the first end 411 of the extender 400 allows for the arrangement of the slewing bearing 500 for pitching the rotor blade 110 at first end 411. The support member 200 provides additional stiffness at the first end 411. Thus, long extender 400, with a length 403 of 6 meters or more can be used and comprise sufficient stiffness due to the support member. Alternatively, or additionally, the extender 400 can be made of composites that by itself would not be stiff enough to support the slewing bearing 500 and the pitch system 300. The support member 200 provides additional stiffness such that composites can be used as material for the extender 400.

The support member 200 arranged is annularly interposed between the slewing bearing 500 and the first end 411 of the extender 400. The support member 200 is connectable to the extender 400 with the bolts 301, even in case of the extender 400 being made of steel. The support member 200 reinforces the extender 400 at the interface between the slewing bearing 400 and the first end 411 of the extender 400.

The support member 200 can be further reinforced by a stiffening beam and/or web (not explicitly shown) which also provides provisions for multiple positioning of pitch drives. The stiffening beam and/or web also allows for mounting of additional elements like a pitch box, a cabinet, or other elements of the pitch system 300. Such a stiffening beam and/or web may be cast with the support member 200 or attached to the support member 200 using any of the known attaching means, e.g., fasteners, welds, etc. Provisions 205 provided in the support member 200 may allow fitment or attachment of the stiffening beam and/or web, or any other component e.g., pitch system components like pitch box, etc.

In an embodiment, the first bearing ring 510 and the second bearing ring 520 may be designed to be compatible with a hydraulic pitch system instead of an electrical pitch system exemplarily depicted in Figures 3 to 5. For example, the second bearing ring 520 or the first bearing ring 510 need not comprise teeth 540 but may be plain in design. The movable ring, e.g., the second bearing ring 520 that carries the rotor blade 110 may be provided, for example, with a support plate or a pitch plate (not shown). The support plate or pitch plate may be rotatably actuated by the extending part (e.g., a piston rod carried by a piston) of a hydraulic pitch drive, while the stationary counterpart (e.g., a hydraulic cylinder enclosing the piston) of the hydraulic pitch drive may be fixedly attached to the support member 200. A linear actuation of the piston and piston rod inside the fixed cylinder is translated into a rotational movement of the pitch plate, and therefore, the movable ring of the slewing bearing 500, resulting in pitching of the rotor blade.

Figure 7 shows a flowchart of a method for assembling the rotor 100.

In step 601, the support member 200 and the slewing bearing 500 are mounted to the first structure 112, which in the examples described above is an extender 400. This is done as often as number of rotor blades 110 are intended for the rotor hub 112, for example three times for three rotor blades. For example, the extenders 400 with the support member 200 and the slewing bearing 500 are then transported to the site.

In step 602, the extenders 400 with the support member 200 and the slewing bearing 500 are mounted on the rotor hub 112. For example, this is done at the site. For example, additional installation is done, for example cable connection.

In step 603, the rotor hub 112 of step 602 with the extenders 400 attached to it is lifted to the top of the tower 102. This is in particular done before the rotor blades 110 are mounted. The rotor hub 112 with the extenders 400 is attached to the rotor shaft 114 at the top of the tower 102.

Afterwards, in a step 604, the rotor blades 110 are attached to the extenders 400. The rotor blades 110 are attached to the extenders 400 while the rotor hub 112 is already attached to the rotor shaft 114 at the top of the tower 102.

For example, the support member 200 and the first bearing ring 510 are attached via bolts 310 to the extender 400 to form an extender assembly, for example, in a facility or an assembly unit. The pitch system 300 is installed to the support member 200 of the extender assembly. The extender assembly having the support member 200 and the pitch system 300 is transported to the site. The rotor hub 11 can be transported separately. All three extender assemblies are attached to the rotor hub 112 at the site. Necessary cable connections are performed between the rotor hub 112 and the extender assembly. An optional spinner may be mounted. Afterward, the rotor hub 112 with the three extender assemblies attached to it is lifted as an assembly to the top of the tower 102. Afterwards, each rotor blade 100 is mounted individually to the respective extender assembly.

The extender 400, the support member 200 and the slewing bearing 500 can be transported as a unified assembly. This allows a cost-effective installation.

### References

- 100: wind turbine
- 102: tower
- 104: foundation
- 106: nacelle
- 108: rotor
- 110: rotor blade
- 112: rotor hub
- 114: rotor shaft

- 200: support member
- 201: first mounting surface
- 202: second mounting surface
- 203: flange
- 204: inward direction
- 205: provision
- 206, 207: segment
- 208: thickness
- 210: support portion
- 211: through hole
- 212: extension
- 213: further extension
- 214: groove

- 300: blade pitch system
- 301: fastener
- 302: pitch drive
- 303: toothed wheel

- 400: extender
- 401: first diametrical portion
- 402: second diametrical portion
- 403: length
- 411: first end
- 412: second end

- 500: slewing bearing
- 510: first bearing ring
- 520: second bearing ring
- 530: thickness
- 540: teeth
- 550: further fastener

- 601 - 604: method steps

## Claims

1. A support member (200) for a blade pitch system (300) of a wind turbine (100), the support member (200) comprising:
- a first mounting surface (201) configured to be mounted to a first structure (112, 400) of the wind turbine (100),
- a second mounting surface (202) configured to be mounted to one of a first bearing ring (510) and a second bearing ring (520) of a slewing bearing (500) of the blade pitch system (300), the second mounting surface (202) being opposite to the first mounting surface (201), and
- a support portion (210) extending at least partially along a circumference of the support member (200),
wherein the support member (200) is configured to carry a plurality of fasteners (301) for connecting the first bearing ring (510) of the slewing bearing (500) to the first structure (112, 400) through the support member (200).

2. The support member according to claim 1, wherein the support member (200) further comprises a flange (203) extending radially from the support portion (210) and configured to carry a pitch drive (302) of the blade pitch system (300).

3. The support member according to claim 2, wherein at least one of the support portion (210) and the flange (203) comprises a stepped extension (212) adjoining the first mounting surface (201).

4. The support member according to claim 3, wherein the stepped extension (212) is configured to abut at least one of a first diametrical portion (401) and a second diametrical portion (402) of the first structure (112, 400), a first diameter of the first diametrical portion (401) being different than a second diameter of the second diametrical portion (402).

5. The support member according to claim 1, wherein the support member (200) comprises a toothing having a plurality of teeth arranged adjacent to the support portion (210).

6. The support member according to any one of the preceding claims, wherein the support portion (210) comprises at least one of a stepped contour, an arcuate contour, and a tapered contour protruding radially (204) from the support member (200).

7. The support member according to any one of the preceding claims, wherein the first structure (400) is one of:
- a rotor hub (112) of the wind turbine (100), and
- an extender (400) coupled to a rotor hub (112) of the wind turbine (100).

8. The support member according to any one of the preceding claims, wherein the support member (200) comprises a provision (205) for supporting a component (302), wherein the component (302) in particular is at least one of a stiffening element and a pitch system component (302).

9. The support member according to any one of the preceding claims, wherein the support member (200) comprises a plurality of segments (206, 207).

10. A rotor for a wind turbine (100), the rotor (108) comprising:
- a support member (200) according to any one of the preceding claims,
- a rotor hub (112),
- a slewing bearing (500), comprising:
- a first bearing ring (510) and a second bearing ring (520), wherein the second bearing ring (520) is arranged coaxially relative to the first bearing ring (510), wherein one of the first bearing ring (510) and the second bearing ring (520) is mounted to the support member (200),
and
- a rotor blade (110), wherein the rotor blade (110) is coupled to the other of the first bearing ring (510) and the second bearing ring (520), such that the rotor blade (110) is rotatable relative to the rotor hub (112).

11. The rotor according to claim 10, comprising an extender (400), wherein the extender (400) comprising a first end (411) and a second end (412), the second end (412) being opposite to the first end (411), wherein the extender (400) is mounted to the rotor hub (112) at the second end (412), and wherein the support member (200) is mounted to the first end (411).

12. The rotor according to claim 11, wherein the extender (400) comprises a hollow cylindrical shape, and wherein the extender (400) is made of one of concrete, a metal, an alloy, and a fibre-reinforced material.

13. The rotor according any one of claims 10 to 12, wherein the support member (200) comprises a thickness (208) between the first mounting surface (201) and the second mounting surface (202), wherein a ratio of the thickness (208) of the support member (200) to a thickness (530) of the one of the first bearing ring (510) and the second bearing ring (520) that is mounted to the support member (200) is less than unity, in particular in a range from 0.4 to 0.9, preferably in a range from 0.5 to 0.8.

14. The rotor according to any one of claims 10 to 13, wherein the one of the first bearing ring (510) and the second bearing ring (520) to which the rotor blade (110) is coupled comprises teeth (540).

15. A method for assembling a rotor (108) for a wind turbine (100), the method comprising:
- providing a first structure (112, 400) of the wind turbine (100),
- providing a support member (200) according to any one of the claims 1 to 9,
- providing a slewing bearing (500),
- mounting the support member (200) to the first structure (112, 400),
- mounting the slewing bearing (500) to the support member (200).

16. The method according to claim 15, comprising:
- attaching a pitch drive (302) to one of the support member (200) and a bearing ring (510, 520) of the slewing bearing (500), wherein the pitch drive (302) is configured to engage with the other of the support member (200) and the bearing ring (510, 520) for pitching.

17. The method according to claim 15 or 16, comprising:
- lifting the rotor hub (112) to a top of a tower (102) of the wind turbine (100),
- fixing the rotor hub (112) to a transmission assembly of the wind turbine (100), in particular to a rotor shaft (114) of the wind turbine, and
- coupling a rotor blade (110) to the slewing bearing (500).
